# EUROPÄISCHE PATENTSCHRIFT

(11) **EP 4 037 956 B1**
(45) Veröffentlichungstag und Bekanntmachung des Hinweises auf die Patenterteilung: **10.06.2026**
(21) Anmeldenummer: 20772057.4
(22) Anmeldetag: 15.09.2020
(51) Int. Cl.: B62D 5/04, B60G 3/00, B62D 7/04

(54) **FLURGEBUNDENES FAHRZEUG**
FLOOR-BOUND VEHICLE
VÉHICULE LIÉ AU SOL

(30) Priorität: 30.09.2019 DE 102019126390
(43) Veröffentlichungstag der Anmeldung: 10.08.2022
(73) Patentinhaber: Broetje-Automation GmbH, 26180 Rastede (DE)
(72) Erfinder: EUSTERWIEMANN, Christoph, 26121 Oldenburg (DE)
(74) Vertreter: Gottschald Patentanwälte Partnerschaft mbB
(86) Internationale Anmeldenummer: PCT/EP2020/075694
(87) Internationale Veröffentlichungsnummer: WO 2021/063666

(56) Entgegenhaltungen:
- WO-A1-2018/136987
- DE-A1- 102016 210 947
- GB-A- 2 260 108

## Beschreibung

Die vorliegende Erfindung betrifft ein flurgebundenes Fahrzeug, insbesondere für eine verfahrbare Fertigungsanlage mit einer Bearbeitungseinheit zur Bearbeitung eines Werkstücks, sowie eine verfahrbare Fertigungsanlage zur Bearbeitung eines Werkstücks, insbesondere eines Flugzeugstrukturbauteils. Derartige flurgebundene Fahrzeuge und verfahrbare Fertigungsanlagen sind aus dem Stand der Technik bekannt. Diese flurgebundenen Fahrzeuge weisen in der Regel einen Fahrantrieb auf, mit denen sie an verschiedene Arbeitsstationen gefahren werden können. Häufig ist auf diesen flurgebundenen Fahrzeugen ein Bearbeitungsroboter zur Bearbeitung eines Werkstücks angeordnet. Diese Fertigungsanlagen werden auch als mobile Roboterplattformen bezeichnet.

In der DE 10 2016 210 947 A1 und der WO 2018/136987 A1 sind flurgebundene Fahrzeuge beschrieben, auf denen ein Roboter angeordnet werden kann. In der GB 2 260 108 A ist eine Antriebseinheit für einen Kameraständer beschrieber Dabei weist die Antriebseinheit zumindest ein Antriebsrad und ggf. ein weiteres Rad, einen Fahrantrieb zum Antreiben des zumindest einen Antriebsrades, einen Radträger, an dem das mindestens eine Antriebsrad angeordnet ist, und einen Lenkantrieb zum Verstellen des Radträgers mit dem Antriebsrad um eine geometrischen Lenkachse und damit zum Lenken des Antriebsrad auf, wobei zum Lenken der Radträger von dem Lenkantrieb gegenüber dem Fahrantrieb verstellbar ist, wobei der Radträger eine Schwenkeinrichtung aufweist, über das Antriebsrad und ggf. das weitere Rad zum Ausgleich von Unebenheiten im Boden um eine geometrische Schwenkachse schwenkbar ist.

Beispielsweise ist in der DE 20 2015 101 427 U1 eine Fertigungsanlage mit einem flurgebundenen Fahrzeug beschrieben, auf welchem ein Bearbeitungsroboter mit einer Werkzeugeinheit angeordnet ist. Der Bearbeitungsroboter wird hier zum Auftrag eines Klebstoffs und/oder eines Dichtmittels genutzt. Das flurgebundene Fahrzeug ist omnidirektional beweg- und lenkbar ausgebildet. Hierfür weist es Mecanum-Räder auf.

Derartige flurgebundene Fahrzeuge mit Mecanum-Rädern haben den Nachteil, dass insbesondere auf unebenen Untergründen eine genaue Positionierung nicht möglich oder nur mit erheblichem steuerungstechnischem Aufwand möglich ist. Dies gilt insbesondere, wenn das flurgebundene Fahrzeug mehrere Räder aufweist, so dass einzelne Mecanum-Räder fortwährend keinen oder nur partiellen Bodenkontakt mit einer Flanke haben.

Der Erfindung liegt das Problem zugrunde, das bekannte flurgebundene Fahrzeug derart auszugestalten und weiterzubilden, dass auf konstruktiv einfache und kostengünstige Art und Weise eine gute Positioniergenauigkeit und Traktion auch auf unebenen Böden erreicht wird.

Das obige Problem wird bei einem flurgebundenen Fahrzeug durch die Merkmale von Anspruch 1 gelöst.

Das vorschlagsgemäße flurgebundene Fahrzeug, insbesondere für eine verfahrbare Fertigungsanlage mit einer Bearbeitungseinheit zur Bearbeitung eines Werkstücks, weist mindestens zwei Antriebseinheiten auf. Die Antriebseinheiten weisen jeweils zumindest ein Antriebsrad, einen Fahrantrieb zum Antreiben des mindestens einen Antriebsrades, einen Radträger, an dem das mindestens eine Antriebsrad angeordnet ist, und einen Lenkantrieb zum Verstellen des Radträgers mit dem Antriebsrad um eine geometrische Lenkachse und damit zum Lenken des Antriebsrades auf. Dabei ist vorgesehen, dass zum Lenken der jeweilige Radträger von dem jeweiligen Lenkantrieb gegenüber dem jeweiligen Fahrantrieb verstellbar ist.

Mit der vorschlagsgemäßen Lösung eröffnen sich trotz der implementierten Lenkfunktion große Freiheitsgrade bei der Aufhängung der jeweiligen Antriebsräder. Der Grund hierfür besteht darin, dass eine Funktionstrennung zwischen Lenken und Antreiben realisiert ist, die sich dadurch äußert, dass der Fahrantrieb bei der vorschlagsgemäßen Lösung einer eventuellen Lenkbewegung nicht folgt. Durch diese Funktionstrennung ergibt sich insbesondere eine einfache Möglichkeit zum Einfedern der Antriebsräder, so dass auch bei einem unebenen Boden ein besserer Bodenkontakt hergestellt werden und so die Positioniergenauigkeit des Fahrzeugs gesteigert werden kann.

Beispielsweise kann durch die Funktionstrennung zwischen Lenken und Antreiben im Falle einer Bodenunebenheit und dem Verlust des Bodenkontaktes zwischen dem Antriebsrad und dem Boden durch ein Verstellen des Radträgers und mit ihm des Antriebsrades mit dem Lenkantrieb, insbesondere auch in eine nicht angestrebte Fahrtrichtung des Fahrzeugs, für das Antriebsrad wieder ein Bodenkontakt hergestellt werden.

Die Merkmale des Anspruchs 2 ermöglichen eine besonders einfache Montage bzw. Demontage und Wartung der Antriebseinheiten.

Die Drehsicherung gemäß Anspruch 3 ermöglicht eine sichere Kraftübertragung vom Fahrantrieb auf das Antriebsrad sowie eine konstruktiv besonders einfache Energieversorgung des Fahrantriebs.

Gemäß Anspruch 4 können die Antriebsräder über einen großen Lenkwinkel um eine Schwenkachse verstellt werden, wodurch eine hohe Wendigkeit erreicht wird. Besonders bevorzugt ist der jeweilige Radträger mit dem Antriebrad durch den Lenkantrieb sogar frei, also in vorzugsweise beide Lenkrichtungen endlos, verstellbar. Hierdurch kann auch eine ganz besonders einfache und flexible Steuerung der Fahrtrichtung des flurgebundenen Fahrzeugs erreicht werden.

Gemäß Anspruch 5 kann die jeweilige Antriebseinheit ein weiteres Rad aufweisen, wodurch eine größere Auflagefläche auf dem Boden und damit eine genauere Positionierbarkeit des flurgebundenen Fahrzeugs insbesondere auf unebenen Böden erreicht werden kann.

Gemäß Anspruch 6 kann die jeweilige Antriebseinheit ein Getriebe aufweisen, welches im Antriebsstrang vom Fahrantrieb zum Antriebsrad angeordnet ist und die Antriebskraft des Fahrantriebs zum Antriebsrad überträgt. Hierbei kann es sich insbesondere um ein Winkelgetriebe oder Untersetzungsgetriebe handeln.

Die beschriebene Schwenkeinrichtung ermöglicht ein obiges Einfedern und damit eine Verbesserung des Bodenkontakts und eine genauere Positionierbarkeit des flurgebundenen Fahrzeugs auf unebenen Böden.

Bei einem Verschwenken des Antriebsrads und gegebenenfalls des weiteren Rads um die geometrische Schwenkachse wird der Fahrantrieb mit verschwenkt. Dies reduziert die Belastung des Antriebsstrangs vom Fahrantrieb zum Antriebsrad.

Gemäß Anspruch 8 kann der Lenkantrieb nicht mitverschwenkt werden. Dies ermöglicht eine einfachere Energieversorgung des Lenkantriebs.

Ferner kann der maximale Schwenkwinkel des Antriebsrades und gegebenenfalls des weiteren Rades um die geometrische Schwenkachse abhängig vom durch den Lenkantrieb eingestellten Lenkwinkel sein. Dies ermöglicht insbesondere eine ganz besonders einfache und sichere Drehmomentsicherung bei gleichzeitig geringen Belastungen des Antriebsstrangs des Fahrantriebs.

Im Anspruch 10 ist eine bevorzugte Ausgestaltung zum Lenken beschrieben, welche insbesondere ein freies Verstellen des Radträgers auf konstruktiv einfache Weise ermöglicht.

Gemäß Anspruch 11 kann das Fahrzeug automatisch gesteuert und berührungslos geführt sein. Die oben angesprochene, flexible Steuerung der Fahrtrichtung ist hier von besonderem Vorteil.

Die Merkmale des Anspruchs 12 ermöglichen einen besonders stabilen Stand des Fahrzeugs im Stillstand. Dies ist insbesondere während der Bearbeitung eines Werkstücks durch eine auf dem Fahrzeug angeordnete Bearbeitungseinheit von besonderem Vorteil.

Darüber hinaus wird das eingangs genannte Problem zusätzlich oder alternativ durch eine verfahrbare Fertigungsanlage mit den Merkmalen von Anspruch 13 gelöst.

Der Lehre von Anspruch 13 kommt eigenständige Bedeutung zu. Dadurch, dass die Drehachse des Antriebsrads gegenüber dem Fahrzeug, insbesondere dem Montageabschnitt, kippbar ist, kann ebenfalls auf unebenen Böden ein besserer Kontakt zwischen Antriebsrad und Boden hergestellt werden. Auch hierdurch lässt sich auf konstruktiv einfache und kostengünstige Art und Weise die Positionsgenauigkeit des Fahrzeugs insbesondere auf unebenen Böden verbessern.

Die verfahrbare Fertigungsanlage kann die im Zusammenhang mit der verfahrbaren Fertigungsanlage der ersten Lehre beschriebenen Merkmale einzeln oder in Kombination aufweisen. Insofern darf auf die Ausführungen zu diesem verwiesen werden.

Die verfahrbare Fertigungsanlage kann zur Bearbeitung eines Werkstücks, insbesondere eines Flugzeugstrukturbauteils, dienen.

Dadurch, dass die Fertigungsanlage ein flurgebundenes Fahrzeug gemäß der zuvor beschriebenen Art und eine Bearbeitungseinheit zur Bearbeitung des Werkstücks aufweist, welche auf dem Fahrzeug angeordnet ist und wobei die Bearbeitungseinheit zur Bearbeitung des Werkstücks eine Werkzeugeinheit, insbesondere ein Bohr- und/oder Nieteinheit aufweist, wird eine besonders einfache und flexible verfahrbare Fertigungsanlage bereitgestellt, welche auch auf unebenen Böden genau positioniert werden kann.

Gemäß Anspruch 16 weist die Bearbeitungseinheit hier und vorzugsweise einen Bearbeitungsroboter auf, welcher in die Werkzeugeinheit als Endeffektor trägt. Hierdurch wird eine mobile Roboterplattform geschaffen, welche sich besonders flexibel für die Fertigung von Flugzeugstrukturbauteilen einsetzen lässt.

Im Folgenden wird die Erfindung anhand einer lediglich Ausführungsbeispiele darstellenden Zeichnung näher erläutert. In der Zeichnung zeigt
- Fig. 1: a) eine schematische Darstellung einer vorschlagsgemäßen verfahrbaren Fertigungsanlage mit einem flurgebundenen Fahrzeug in einer Seitenansicht, b) eine perspektivische Ansicht nur des flurgebundenen Fahrzeugs von schräg oben sowie c) eine perspektivische Ansicht nur des flurgebundenen Fahrzeugs von schräg unten,
- Fig. 2: eine perspektivische Ansicht einer Antriebseinheit des flurgebundenen Fahrzeugs aus Fig. 1, a) von schräg oben und b) von schräg unten,
- Fig. 3: eine Schnittansicht der Antriebseinheit aus Fig. 2 gemäß III-III auf ebenem Boden und
- Fig. 4: eine Seitenansicht der Antriebseinheit aus Fig. 2 mit verschwenktem Antriebsrad auf schrägem Boden.

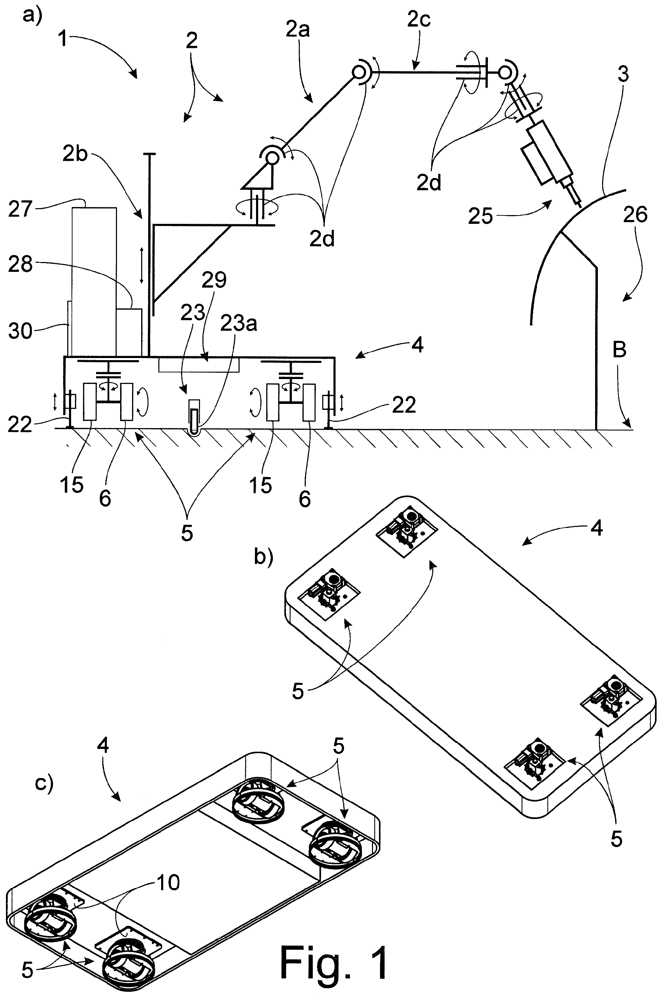

Die Darstellung gemäß Fig. 1 zeigt eine vorschlagsgemäße verfahrbare Fertigungsanlage 1 mit einer Bearbeitungseinheit 2 zur Bearbeitung eines Werkstücks 3, insbesondere eines Flugzeugstrukturbauteils, mit einem flurgebundenen Fahrzeug 4. In der Fig. 1a ist die Fertigungsanlage 1 als mobile Roboterplattform ausgebildet. Bei dem flurgebundenen Fahrzeug 4 handelt es sich hier um ein auf dem Boden frei verfahrbares, also insbesondere schienenunabhängiges Fahrzeug 4.

Dieser Art von Fertigungsanlagen 1, insbesondere den mobilen Roboterplattformen, kommt speziell bei der Bearbeitung von Flugzeugstrukturbauteilen, insbesondere von Rumpfabschnitten und/oder Flügelabschnitten, aufgrund der Größe dieser Bauteile und den dortigen Genauigkeitsanforderungen besondere Bedeutung zu.

Bevor näher auf die vorschlagsgemäße, verfahrbare Fertigungsanlage 1 eingegangen wird, sollen zunächst das flurgebundene Fahrzeug 4 sowie die Antriebseinheit 5 beschrieben werden.

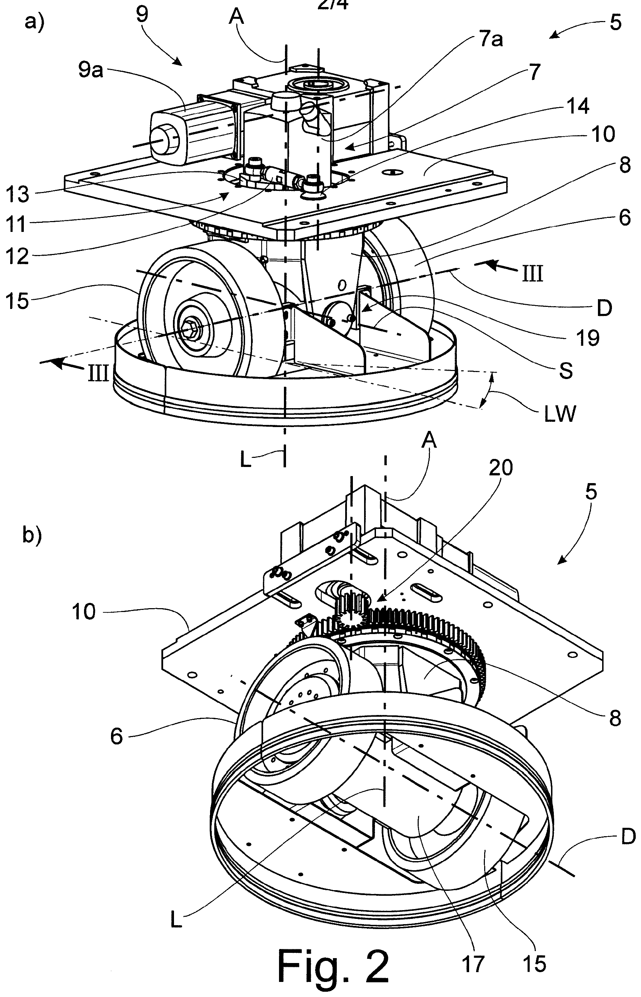

Das flurgebundene Fahrzeug 4 weist mindestens zwei Antriebseinheiten 5 auf. Wie in der Fig. 2 für eine einzelne Antriebseinheit 5 gezeigt, weisen die Antriebseinheiten 5 jeweils zumindest ein Antriebsrad 6, einen Fahrantrieb 7 zum Antreiben des zumindest einen Antriebsrades 6, einen Radträger 5, an dem das mindestens eine Antriebsrad 6 angeordnet ist, und einen Lenkantrieb 6 zum Verstellen des Radträgers 8 mit dem Antriebsrad 6 um eine geometrische Lenkachse L und damit zum Lenken des Antriebsrades 6 auf. Die Lenkachse L ist dabei hier und vorzugsweise im Wesentlichen vertikal, also senkrecht zum Boden, ausgerichtet.

Der Fahrantrieb 7 weist hier einen Fahrantriebsmotor 7a auf, bei dem es sich vorzugsweise um einen Elektromotor handelt. Auch der Lenkantrieb 9 weist hier einen Lenkantriebsmotor 9a auf, bei dem es sich vorzugsweise um einen Elektromotor handelt.

Um eine möglichst hohe Positioniergenauigkeit, insbesondere im Fall von Bodenunebenheiten, zu erreichen, ist bei einem flurgebundenen Fahrzeug 4 gemäß einer ersten Lehre zum Lenken der jeweilige Radträger 8 von dem jeweiligen Lenkantrieb 6 gegenüber dem jeweiligen Fahrantrieb 7 verstellbar. Diese Verstellbarkeit erlaubt insbesondere bei Unebenheiten im Boden einen besonders guten Bodenkontakt beim Verfahren und Lenken und damit eine besonders hohe Positioniergenauigkeit.

Im dargestellten Ausführungsbeispiel ist das Fahrzeug 4 omnidirektional bewegbar und lenkbar ausgebildet. Dies wird dadurch erreicht, dass die Räder durch die lenkbaren Antriebseinheiten 5 bereitgestellt werden. Vorzugsweise werden alle Räder durch die lenkbaren Antriebseinheiten 5 bereitgestellt. Alternativ können jedoch auch nicht gezeigte separate Radeinheiten mit Rädern vorgesehen sein, welche keine angetriebenen Räder aufweisen.

Die Richtung, in welche das Fahrzeug 4 gelenkt werden soll, lässt sich im dargestellten Ausführungsbeispiel durch eine entsprechende Ansteuerung der Antriebseinheiten 5 frei einstellen. Dazu wird hier und vorzugsweise jede einzelne Antriebseinheit 5 einzeln angesteuert, so dass der Lenkwinkel LW jeder Antriebseinheit 5 unabhängig von den jeweils anderen Antriebseinheiten 5 eingestellt werden kann.

Die Antriebseinheiten 5 eines vorschlagsgemäßen, flurgebundenen Fahrzeugs 4 sind hier und vorzugsweise baugleich ausgebildet. Sie können insbesondere auch gleich orientiert und/oder symmetrisch am Fahrzeug 4 angeordnet sein.

Wie in der Fig. 2 gezeigt, weist die Antriebseinheit 5 einen Montageabschnitt 10 auf. Über den Montageabschnitt 10 kann die Antriebseinheit 5 als vormontierte Einheit am flurgebundenen Fahrzeug 4 befestigt werden und/oder von dem flurgebundenen Fahrzeug 4 gelöst werden. Dies ermöglicht eine ganz besonders einfache Ausrüstung des flurgebundenen Fahrzeugs 4 mit den Antriebseinheiten 5. Im Ausführungsbeispiel sind vier Antriebseinheiten 5 vorgesehen. Wie zuvor bereits erwähnt, können zusätzlich auch nicht gezeigte Radeinheiten vorgesehen sein, welche keine angetriebenen Räder aufweisen. Hier und vorzugsweise sind jedoch alle Radeinheiten als Antriebseinheiten 5 ausgebildet, wie noch erläutert wird.

Der Fahrantrieb 7 ist in Bezug auf eine geometrische Antriebsachse A gegenüber dem Fahrzeug 4, insbesondere dem Montageabschnitt 10, drehgesichert. Dies ermöglicht eine ganz besonders einfache Energieversorgung des Fahrantriebs 7 vom Fahrzeug 4 aus, insbesondere ohne die Notwendigkeit von Schleifringen und/oder Kabelschleppen. Die Energieversorgung des Fahrantriebs 7 vom Fahrzeug 4 aus ist hier somit vorzugsweise Schleifring-frei und/oder Kabelschlepp-frei ausgebildet. Dies ist möglich, da der Fahrantrieb 7 nicht von dem Radträger 8 und dem Antriebsrad 6 mitgenommen wird.

Mit der Antriebsachse A ist die Rotationsachse der Antriebswelle 7b des Fahrantriebs 7 gemeint, hier die Rotationsachse der Motorwelle des Fahrantriebmotors 7a.

Die Drehsicherung 11 erfolgt in dem in Fig. 2a) gezeigten Ausführungsbeispiel mittels einer beweglich gelagerten Stange 12. Die Stange 12 kann am Fahrantrieb 7 und/oder einer Befestigung 13 des Fahrantriebs 7 sowie an einem fahrzeugfesten Punkt 14, insbesondere dem Montageabschnitt 10 der jeweiligen Antriebseinheit 5 angreifen. Vorzugsweise gewährt die Drehsicherung 11 dem Fahrantrieb 7 zumindest in eine Richtung ein Bewegungsspiel. Hierauf wird weiter unten mit Bezug auf die Schwenkachse S näher eingegangen.

Die Anbindung an den Fahrantrieb 7 bzw. einer Befestigung 13 des Fahrantriebs 7 und/oder an dem fahrzeugfesten Punkt 14, insbesondere dem Montageabschnitt 10, erfolgt hier und vorzugsweise, insbesondere jeweils, mit einem Kugelgelenk 15.

Im dargestellten und insoweit bevorzugten Ausführungsbeispiel ist der Radträger 8 der Antriebseinheit 5 mit dem Antriebsrad 6 durch den Lenkantrieb 9 um eine geometrische Lenkachse L frei verstellbar. Dies ermöglicht ein steuerungstechnisch besonders einfaches Umsetzen und Steuern der Lenkbewegungen des Fahrzeugs 4. Im Ausführungsbeispiel wird unter anderem hierdurch auch die unidirektionale Bewegbarkeit und Lenkbarkeit des Fahrzeugs 4 ermöglicht.

Es kann jedoch auch vorgesehen sein, dass der Radträger 8 mit dem Antriebsrad 6 durch den Lenkantrieb 9 um eine geometrische Lenkachse L lediglich über mindestens 270°, weiter vorzugsweise mindestens 330°, weiter vorzugsweise mindestens 360°, weiter vorzugsweise mindestens 420°, verstellbar ist.

Um die Positioniergenauigkeit des Fahrzeugs 4 auf unebenem Boden B weiter zu steigern, ist es hier und vorzugsweise vorgesehen, dass die Antriebseinheit 5 ein weiteres Rad 15, insbesondere ein freilaufendes Rad und/oder ein Antriebsrad, aufweist. Im dargestellten und insoweit bevorzugten Ausführungsbeispiel ist das weitere Rad 15 ein freilaufendes Rad. Die Antriebseinheit 5 weist hier also nur ein Antriebsrad 6 auf. Hierdurch kann auf ein Differenzial in der Antriebseinheit 5 verzichtet werden. Das weitere Rad 15 ist an dem Radträger 8 angeordnet.

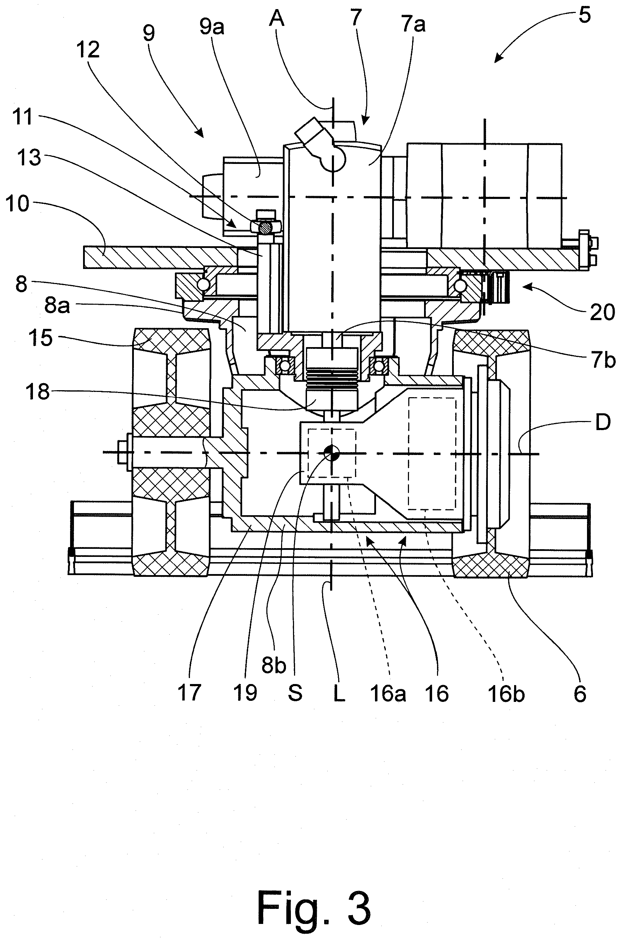

Zum Lenken wird hier der Radträger 8 gemeinsam mit dem Antriebsrad 6 und dem weiteren Rad 15 von dem Lenkantrieb 9 um die Lenkachse L verstellt. Dies ist anhand der Schnittdarstellung in Fig. 3 erkennbar. Wie der Fig. 3 weiter zu entnehmen ist, sind die Drehachsen D des Antriebsrades 6 und des weiteren Rades 15 einer Antriebseinheit 5 koaxial zueinander ausgebildet. Die Drehachse D verläuft im Wesentlichen parallel zum Boden B.

Im dargestellten Ausführungsbeispiel schneidet sich die Drehachse D des Antriebrades 6, und ggf. die Drehachse D des weiteren Rades D, mit der Lenkachse L. Der Radträger 8 bildet hier gemeinsam mit dem Antriebsrad 6 und dem weiteren Rad 15 eine Doppelradanordnung. Hier und vorzugsweise weist jede Antriebseinheit 5 eine solche Doppelradanordnung auf. Ferner sind das Antriebsrad 6 und/oder das weitere Rad 15 hier und vorzugsweise am Radträger zur Lenkachse L versetzt, vorzugsweise mit im Wesentlichen gleichem Abstand zur Lenkachse L, angeordnet, so dass die Lenkachse das Antriebsrad 6 und/oder das weitere Rad 15 nicht schneidet.

Wie in der Fig. 3 gezeigt, weist die Antriebseinheit 5, insbesondere der Radträger 8, mindestens ein Getriebe 16 auf. Hier und vorzugsweise weist die Antriebseinheit 5, insbesondere der Radträger 8, ein Winkelgetriebe 16a und/oder ein Untersetzungsgetriebe 16b auf. Das bzw. die Getriebe 16, 16a, 16b sind im Antriebsstrang 17 vom Fahrantrieb 7 zum Antriebsrad 6 angeordnet, was für eine Übertragung der Antriebskraft des Fahrantriebs 7 zum Antriebsrad 6 sorgt. Im dargestellten und insoweit bevorzugten Ausführungsbeispiel ist die Eingangswelle 16c des Winkelgetriebes 16a koaxial zu der Antriebswelle 7b des Fahrantriebs 7 angeordnet. Antriebswelle und Eingangswelle sind über eine Kupplung 18, insbesondere eine Faltenbalgkupplung, miteinander verbunden. Die Ausgangswelle des Untersetzungsgetriebes 16b ist koaxial zur Drehachse D des Antriebsrades 6 angeordnet. Die Anordnung der Eingangswelle des Winkelgetriebes 16a zur Antriebswelle 7b des Fahrantriebs 7 ermöglicht das Verstellen des Radträgers 8 um die Schwenkachse S gegenüber dem Fahrantrieb 7. Im dargestellten Ausführungsbeispiel ist das Getriebe 16 derart ausgebildet, dass eine Verstellung des Radträgers 8 durch den Lenkantrieb 9 automatisch auch eine Drehung des Antriebsrads 5 bewirkt.

Ferner weist der Radträger 8, wie in den Fig. 2 und 3 gezeigt, eine Schwenkeinrichtung 19 auf, über welche das Antriebsrad 6 und gegebenenfalls das weitere Rad 15 zum Ausgleich von Unebenheiten im Boden B um eine geometrische Schwenkachse S schwenkbar ist bzw. sind. Dies ermöglicht insbesondere ein oben angesprochenes Einfedern zum Ausgleich der Unebenheiten. Im dargestellten Ausführungsbeispiel wird hierdurch erreicht, dass die Drehachse D des Antriebsrads 6 gegenüber dem Fahrzeug 4, insbesondere gegenüber dem Montageabschnitt, kippbar ist. Mit "Einfedem" ist hier und vorzugsweise eine Bewegung des Antriebsrades 6 und/oder des ggf. vorhandenen weiteren Rades 15 zum Fahrzeug 4 hin gemeint. Dabei muss diese Bewegung nicht zwangsweise entgegen der Federkraft einer Feder erfolgen, wie dies im Ausführungsbeispiel auch nicht der Fall ist. Es kann jedoch eine Feder vorgesehen sein, welche der Schwenkbewegung, insbesondere der Kippbewegung, entgegenwirkt.

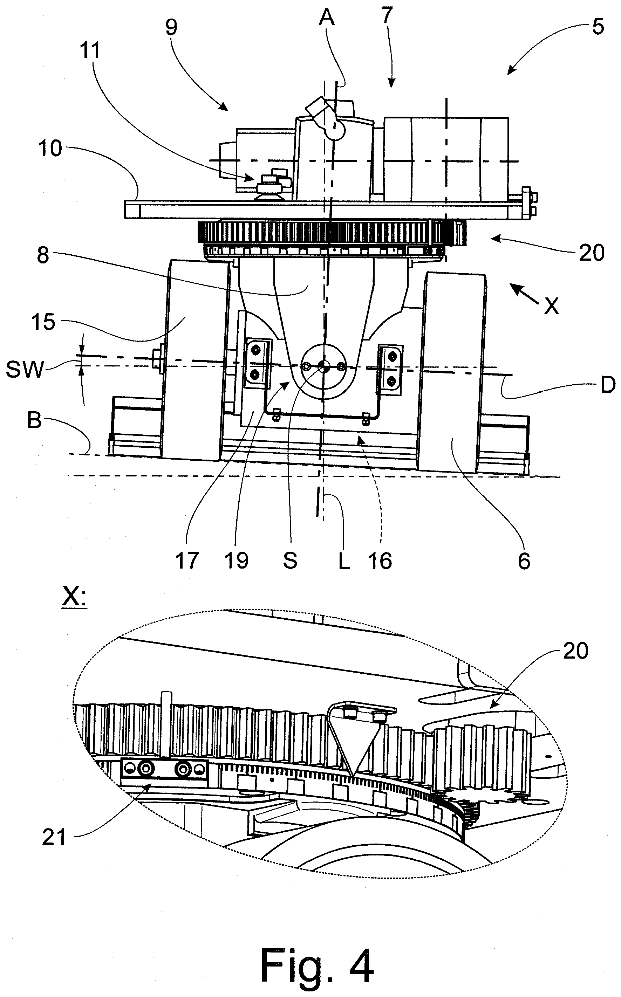

Diese Kippbarkeit der Drehachse D des Antriebsrads 6 kommt im Rahmen der weiteren Lehre eigenständige Bedeutung zu. Die Kippbarkeit ist unabhängig von der Verstellbarkeit des jeweiligen Radträgers 8 gegenüber dem Fahrantrieb 7 einer Antriebseinheit 5. Eine gegenüber dem Fahrzeug 4 gekippte Drehachse D des Antriebsrads 6 ist in der Fig. 4 gezeigt. Die Schwenkachse S verläuft nicht parallel zur Drehachse D des Antriebsrades 6. Hier und vorzugsweise schneidet die Schwenkachse S, die Drehachse D des Antriebsrades 6 und/oder die Drehachse D des weiteren Rads 15.

Zusätzlich oder alternativ kann es vorgesehen sein, dass die Schwenkachse S die Lenkachse L schneidet. Im dargestellten Ausführungsbeispiel schneiden sich die Drehachse D des Antriebsrades 6 und ggf. die Drehachse D des weiteren Rades 15, die Schwenkachse S und die Lenkachse L in einem Punkt. Dies gilt hier und vorzugsweise für jeden einstellbaren Lenkwinkel LW.

Ferner verläuft die Schwenkachse S, wie in der Fig. 4 gezeigt, vorzugsweise im Wesentlichen orthogonal zu der Antriebsachse A und/oder der Lenkachse L und/oder der Drehachse D des Antriebsrades 6 und/oder der Drehachse D des weiteren Rades 5. Mit "im Wesentlichen" ist hier und vorzugsweise mit Bezug auf Winkelangaben, insbesondere auch durch den Begriff "orthogonal" eine Abweichung von gleich oder weniger als +/- 10°, vorzugsweise von gleich oder weniger als +/- 5°, weiter vorzugsweise von gleich oder weniger als +/- 1° Abweichung, gemeint.

Wie in der Fig. 4 gezeigt, wird bei einem Verschwenken des Antriebsrades 6 und gegebenenfalls des weiteren Rades 15 um die geometrische Schwenkachse S der Fahrantrieb 7 mitverschwenkt. Hierdurch können Belastungen im Antriebsstrang 17 reduziert werden. Vorzugsweise sind die Lenkachse L und die Antriebsachse A des Fahrantriebs 7 in einer Grundstellung koaxial zueinander. Bei einem Verschwenken des Antriebsrads 6 und ggf. des weiteren Rads 15 entfällt die Koaxialität, wie in der Fig. 4 gezeigt ist.

Im dargestellten Ausführungsbeispiel ist der maximale Schwenkwinkel SW des Antriebsrades 6 und ggf. des weiteren Rades 15 um die geometrische Schwenkachse S abhängig vom durch den Lenkantrieb 9 eingestellten Lenkwinkel LW. Der maximale Schwenkwinkel SW ändert sich also in Abhängigkeit vom eingestellten Lenkwinkel LW. Dies wird hier und vorzugsweise durch die Drehmomentsicherung 11 erreicht. Dabei kann die Ausbildung derart sein, dass der maximale Schwenkwinkel SW einer Antriebseinheit 5, insbesondere aller Antriebseinheiten 5, bei einer Fahrt des Fahrzeugs 4 in einer Längsrichtung, also in Richtung der Längserstreckung des Fahrzeugs 4, oder in einer Querrichtung, also in Richtung der Quererstreckung des Fahrzeugs 4, oder, in einer Diagonalrichtung, also ungleich der Längsrichtung oder der Querrichtung, insbesondere in einer Richtung von im Wesentlichen 45° zur Längsrichtung, am geringsten ist. Dies wird hier und vorzugsweise durch die Orientierung der Drehmomentsicherung 11, hier der Stange 12, erreicht. Vorzugsweise erstreckt sich die Stange 12 in dieselbe Richtung, in welche der maximale Schwenkwinkel SW des Antriebsrades 6 am geringsten ist. Insbesondere kann jedoch auch vorgesehen sein, dass sich die Fahrtrichtung des Fahrzeugs 4, in der der maximale Schwenkwinkel einer Antriebseinheit 5 am geringsten ist, für mindestens zwei Antriebsscheiben 5, insbesondere alle Antriebseinheiten 5, unterscheidet.

Der maximale Schwenkwinkel SW ist vorzugsweise kleiner gleich 5°, weiter vorzugsweise kleiner gleich 3°, weiter vorzugsweise kleiner gleich 2,5°.

Der Radträger 8 weist eine Dreheinheit 8a auf. Ferner weist er eine Schwenkeinheit 8b auf, welche um die Schwenkachse L gegenüber der Dreheinheit verschwenkbar ist. Im dargestellten Ausführungsbeispiel ist die Schwenkeinheit 8b topfartig ausgebildet. An der Schwenkeinheit 8b ist das weitere Rad 15 angeordnet. Ferner ist in der Schwenkeinheit 8b das mindestens eine Getriebe 16 angeordnet.

Zum Lenken weist die Antriebseinheit 5 ein Lenkgetriebe 20 auf. Der Lenkantrieb 9 verstellt, hier dreht, über das Lenkgetriebe 20 den Radträger 8 um die Lenkachse L. Im dargestellten Ausführungsbeispiel weist das Lenkgetriebe 20 ein Zahnradgetriebe auf. Wie in der Fig. 2b gezeigt, treibt der Lenkantrieb 9 ein kleines Zahnrad 20a an, über welches ein am Radträger 8, hier der Dreheinheit 8a, befestigtes Zahnrad 20b bewegt wird und mit diesem der Radträger 8 um die Lenkachse L verstellt wird.

Zusätzlich oder alternativ kann das Lenkgetriebe 20 jedoch auch ein nicht gezeigtes Zahnriemengetriebe und/oder ein nicht gezeigtes Riemengetriebe aufweisen.

Ferner weist die Antriebseinheit 5 eine Sensoreinheit 21 auf. Diese ist vorzugsweise zur Bestimmung des Lenkwinkels LW und/oder zum Referenzieren einer Stellung des Radträgers 8 gegenüber dem Fahrzeug 4, insbesondere dem Montageflansch 10, ausgebildet.

Bei einer Kurvenfahrt werden die Antriebseinheiten 5 des Fahrzeugs 4 vorzugsweise derart angesteuert, dass sich die Drehachsen D der Antriebsräder 6 der verschiedenen Antriebseinheiten 5 des Fahrzeugs 4 in einem Punkt schneiden.

Um einen besonders festen Stand an einem Ort des flurgebundenen Fahrzeugs 4 zu ermöglichen, kann es vorgesehen sein, dass die Antriebseinheiten 5 derart gegenüber dem Fahrzeug 4 im Übrigen einfahrbar sind, dass das flurgebundene Fahrzeug 4 für einen sicheren Stand auf dem Boden aufsetzt, insbesondere derart, dass das Antriebsrad 6 bzw. die Antriebsräder nicht mehr den Boden berührt bzw. berühren.

Zusätzlich oder alternativ kann das flurgebundene Fahrzeug 4 Stützen 22 zum Anheben des flurgebundenen Fahrzeugs 4 derart aufweisen, dass das Antriebsrad 6 bzw. die Antriebsräder 6 im angehobenen Zustand des Fahrzeugs 4 nicht mehr den Boden berührt bzw. berühren. Diese in Fig. 1a gezeigte Variante ist von besonderem Vorteil, wenn das flurgebundene Fahrzeug 4 einen Teil einer vorschlagsgemäßen verfahrbaren Fertigungsanlage 1 bildet. Hierdurch kann ein ganz besonders fester Stand der verfahrbaren Fertigungsanlage 1 mit einer Bearbeitungseinheit 2 für die Bearbeitung eines Werkstücks 3 erreicht werden. Die Prozessarbeitskräfte können hierdurch nämlich entsprechend sicher von der verfahrbaren Fertigungsanlage 1 aufgenommen und in den Boden geleitet werden.

Ferner kann das Fahrzeug 4 eine Ankervorrichtung 23 mit mindestens einem Anker 23a aufweisen. Diese Ankervorrichtung 23 ist vorzugsweise separat zu den Stützen 22 ausgebildet. Der Anker 23a kann beispielsweise ein Stift, insbesondere mit einem Halbkugelkopf, sein, welcher in eine zu ihm korrespondierende Ankeröffnung 24 im Boden B eintaucht. Hierdurch kann das Fahrzeug 4 auf eine vordefinierte Position durch Eintauchen des Ankers 23a in die Ankeröffnung 24 zentriert werden und/oder besonders sicher Bearbeitungskräfte in den Boden B einleiten.

Im Ausführungsbeispiel ist die Bearbeitungseinheit 2 auf dem flurgebundenen Fahrzeug 4 angeordnet. Zur Bearbeitung des Werkstücks 3 weist die Bearbeitungseinheit 2 eine Werkzeugeinheit 25, insbesondere eine Bohr- und/oder Nieteinheit, auf. Ferner weist Bearbeitungseinheit 2 einen Bearbeitungsroboter 2a auf, welcher die Werkzeugeinheit 25 als Endeffektor trägt. Der Bearbeitungsroboter 2a ist an, insbesondere auf, einer Höhenverstellung 2b der Bearbeitungseinheit 2 angeordnet. Hierdurch kann der Arbeitsbereich des Bearbeitungsroboters 2 vergrößert werden.

Der Bearbeitungsroboter 2 weist eine Verstellkinematik 2c zur Verstellung der Werkzeugeinheit 25 auf. Diese weist vorzugsweise mindestens vier Verstellachsen 2d, insbesondere mindestens vier Rotationsverstellachsen, auf. Besonders bevorzugt weist der Bearbeitungsroboter 2a mindestens sechs oder sieben Verstellachsen 2d, insbesondere Rotationsverstellachsen, auf. Er kann beispielsweise nach Art eines Mehrachs-Knickarmroboters ausgestaltet sein. Besonders bevorzugt weist die Verstellkinematik 2c mindestens sechs, insbesondere mindestens sieben, Verstellachsen 2d, insbesondere Rotationsverstellachsen, auf.

Das Werkstück 3 wird zur Bearbeitung durch die verfahrbare Fertigungsanlage 1 vorzugsweise getrennt von dieser gehalten, insbesondere durch eine Werkstückhaltevorrichtung 26. Die Werkstückhaltevorrichtung 26 ist dabei vorzugsweise ortsfest angeordnet und kann ggf. das Werkstück 3 bewegen.

Die Fertigungsanlage 1 kann einen Nietspeicher 27 zur Versorgung der Werkzeugeinheit 26 mit Nietelementen aufweist. Ferner kann die Fertigungsanlage 1 einen Drucklufterzeuger zur Versorgung der Bearbeitungseinheit, insbesondere der Werkzeugeinheit, und/oder des Nietspeichers 27 mit Druckluft aufweisen.

Auch kann das flurgebundene Fahrzeug bzw. die verfahrbare Fertigungsanlage 1 einen Energiespeicher 29 zum Speichern von, insbesondere elektrischer, Energie zum Verfahren des Fahrzeugs 4 bzw. der Fertigungsanlage 1 aufweisen.

Schließlich wird darauf hingewiesen, dass die Fertigungsanlage 1 bzw. das Fahrzeug 4 eine Steuerung 30 zum Steuern ihrer Komponenten, insbesondere der Antriebseinheiten 5 und der Bearbeitungseinheit 2, aufweist. Vorzugsweise handelt es sich bei der Steuerung um eine NC-Steuerung.

## Patentansprüche

1. Flurgebundenes Fahrzeug, insbesondere für eine verfahrbare Fertigungsanlage (1) mit einer Bearbeitungseinheit (2) zur Bearbeitung eines Werkstücks (3), mit mindestens zwei Antriebseinheiten (5),
wobei die Antriebseinheiten (5) jeweils zumindest ein Antriebsrad (6) und ggf. ein weiteres Rad (15), einen Fahrantrieb (7) zum Antreiben des zumindest einen Antriebsrades (6), einen Radträger (8), an dem das mindestens eine Antriebsrad (6) angeordnet ist, und einen Lenkantrieb (9) zum Verstellen des Radträgers (8) mit dem Antriebsrad (6) um eine geometrische Lenkachse (L) und damit zum Lenken des Antriebsrads (6) aufweisen,
wobei zum Lenken der jeweilige Radträger (8) von dem jeweiligen Lenkantrieb (9) gegenüber dem jeweiligen Fahrantrieb (7) verstellbar ist,
wobei der jeweilige Radträger (8) eine Schwenkeinrichtung (19) aufweist, über welche das Antriebsrad (6) und ggf. das weitere Rad (15) zum Ausgleich von Unebenheiten im Boden um eine geometrische Schwenkachse (S) schwenkbar ist und wobei bei einem Verschwenken des Antriebsrads (6) und ggf. des weiteren Rads (15) um die geometrische Schwenkachse (S) der Fahrantrieb (7) mitverschwenkt wird.

2. Flurgebundenes Fahrzeug nach Anspruch 1, **dadurch gekennzeichnet, dass** die jeweilige Antriebseinheit (5) einen Montageabschnitt (10) aufweist, über welchen die Antriebseinheit (5) als vormontierte Einheit am flurgebundenen Fahrzeug (4) befestigbar und/oder von dem flurgebundenen Fahrzeug (4) lösbar ist.

3. Flurgebundenes Fahrzeug nach Anspruch 1 oder 2, **dadurch gekennzeichnet, dass** der jeweilige Fahrantrieb (7) in Bezug auf seine geometrische Antriebsachse (A) gegenüber dem Fahrzeug (4), insbesondere dem Montageabschnitt (10), drehgesichert ist, vorzugsweise, dass die jeweilige Drehsicherung (11) durch eine beweglich gelagerte Stange (12) erfolgt, wofür die Stange (12) am Fahrantrieb (7) und/oder einer Befestigung des Fahrantriebs (13) sowie an einem fahrzeugfesten Punkt (14), insbesondere dem Montageabschnitt (10), angreift.

4. Flurgebundenes Fahrzeug nach einem der vorhergehenden Ansprüche, **dadurch gekennzeichnet, dass** der jeweilige Radträger (8) mit dem Antriebsrad (6) durch den jeweiligen Lenkantrieb (9) um die geometrische Lenkachse (L) über mindestens 270°, weiter vorzugsweise mindestens 330°, weiter vorzugsweise mindestens 360°, weiter vorzugsweise mindestens 420°, weiter vorzugsweise frei, verstellbar ist.

5. Flurgebundenes Fahrzeug nach einem der vorhergehenden Ansprüche, **dadurch gekennzeichnet, dass** die jeweilige Antriebseinheit (5) das weitere Rad (15), insbesondere ein freilaufendes Rad und/oder ein Antriebsrad, aufweist, wobei das weitere Rad (15) an dem Radträger (8) angeordnet ist und wobei zum Lenken der Radträger (8) gemeinsam mit dem Antriebsrad (6) und dem weiteren Rad (15) von dem Lenkantrieb (9) um die Lenkachse (L) verstellbar ist, vorzugsweise, dass die Drehachse (D) des Antriebsrades (6) und die Drehachse (D) des weiteren Rades (15) koaxial zueinander sind.

6. Flurgebundenes Fahrzeug nach einem der vorhergehenden Ansprüche, **dadurch gekennzeichnet, dass** die jeweilige Antriebseinheit (5), insbesondere der Radträger (8), mindestens ein Getriebe (16), insbesondere ein Winkelgetriebe (16a) und/oder ein Untersetzungsgetriebe (16b), aufweist, welches im Antriebsstrang (17) vom Fahrantrieb (7) zum Antriebsrad (6) angeordnet ist und die Antriebskraft des Fahrantriebs (7) zum Antriebsrad (6) überträgt, vorzugsweise, dass die Eingangswelle eines jeweiligen Getriebes (16, 16a), insbesondere des Winkelgetriebes (16a), koaxial zu der Antriebswelle (A) des Fahrantriebs (7) angeordnet ist und dass die Ausgangswelle des jeweiligen Getriebes (16, 16b), insbesondere des Untersetzungsgetriebes (16b), koaxial zur Drehachse (D) des Antriebsrades (6) angeordnet ist.

7. Flurgebundenes Fahrzeug nach einem der vorhergehenden Ansprüche, **dadurch gekennzeichnet, dass** beim Verschwenken die Drehachse (D) des Antriebsrads (6) und ggf. die Drehachse (D) des weiteren Rads (15) gegenüber dem Fahrzeug (4), insbesondere dem Montageabschnitt (10), gekippt wird.

8. Flurgebundenes Fahrzeug nach einem der vorhergehenden Ansprüche, **dadurch gekennzeichnet, dass** bei einem des Antriebsrads (6) und ggf. des weiteren Rads (6) um die geometrische Schwenkachse (S) der Lenkantrieb (9) nicht mitverschwenkt wird.

9. Flurgebundenes Fahrzeug nach einem der vorhergehenden Ansprüche, **dadurch gekennzeichnet, dass** der maximale Schwenkwinkel (SW) des Antriebsrads (6) und ggf. des weiteren Rads (15) um die geometrische Schwenkachse (S) abhängig vom durch den Lenkantrieb (9) eingestellten Lenkwinkel (LW) ist.

10. Flurgebundenes Fahrzeug nach einem der vorhergehenden Ansprüche, **dadurch gekennzeichnet, dass** die Antriebseinheit (5) ein Lenkgetriebe (20) aufweist und dass der Lenkantrieb (9) über das Lenkgetriebe (20) den Radträger (8) um die Lenkachse (L) verstellt, vorzugsweise, dass das Lenkgetriebe (20) ein Zahnradgetriebe und/oder Zahnriemengetriebe und/oder Riemengetriebe ist.

11. Flurgebundenes Fahrzeug nach einem der vorhergehenden Ansprüche, **dadurch gekennzeichnet, dass** es automatisch gesteuert und berührungslos geführt ist.

12. Flurgebundenes Fahrzeug nach einem der vorhergehenden Ansprüche, **dadurch gekennzeichnet, dass** die Antriebseinheiten (5) derart gegenüber dem Fahrzeug (4) im Übrigen einfahrbar sind, dass das flurgebundene Fahrzeug (4) für einen sicheren Stand auf den Boden aufsetzt und, insbesondere das Antriebsrad (6) bzw. die Antriebsräder (6) nicht mehr den Boden berührt bzw. berühren, und/oder, dass das flurgebundenes Fahrzeug (4) Stützen (22) zum Anheben des flurgebundenen Fahrzeugs (4) derart aufweist, dass das Antriebsrad (6) bzw. die Antriebsräder (6) im angehobenen Zustand des Fahrzeugs (4) nicht mehr den Boden (B) berührt bzw. berühren.

13. Flurgebundenes Fahrzeug, insbesondere für eine verfahrbare Fertigungsanlage (1) mit einer Bearbeitungseinheit (2) zur Bearbeitung eines Werkstücks (3), mit mindestens zwei Antriebseinheiten (5),
wobei die Antriebseinheiten (5) jeweils zumindest ein Antriebsrad (6) und ggf. ein weiteres Rad (15), einen Fahrantrieb (7) zum Antreiben des zumindest einen Antriebsrades (6), einen Radträger (8), an dem das mindestens eine Antriebsrad (6) angeordnet ist, und einen Lenkantrieb (9) zum Verstellen des Radträgers (8) mit dem Antriebsrad (6) um eine geometrische Lenkachse (L) und damit zum Lenken des Antriebsrads (6) aufweisen,
wobei der jeweilige Radträger (8) eine Schwenkeinrichtung (19) aufweist, über welche das Antriebsrad (6) und ggf. das weitere Rad (15) zum Ausgleich von Unebenheiten im Boden um eine geometrische Schwenkachse (S) schwenkbar ist, wobei die Drehachse (D) des Antriebsrads (6) gegenüber dem Fahrzeug (4), insbesondere dem Montageabschnitt (10), kippbar ist und wobei bei einem Verschwenken des Antriebsrads (6) und ggf. des weiteren Rads (15) um die geometrische Schwenkachse (S) der Fahrantrieb (7) mitverschwenkt wird.

14. Flurgebundenes Fahrzeug nach Anspruch 13, **gekennzeichnet durch** den kennzeichnenden Teil eines der Ansprüche 2 bis 12.

15. Verfahrbare Fertigungsanlage zur Bearbeitung eines Werkstücks (3), insbesondere eines Flugzeugstrukturbauteils,
wobei die Fertigungsanlage (1) ein flurgebundenes Fahrzeug (4) nach einem der Ansprüche 11 bis 14 und eine Bearbeitungseinheit (2) zur Bearbeitung des Werkstücks (3) aufweist, welche auf dem Fahrzeug (4) angeordnet ist, wobei die Bearbeitungseinheit (2) zur Bearbeitung des Werkstücks (3) eine Werkzeugeinheit (25), insbesondere ein Bohr- und/oder Nietwerkeinheit zum Bohren und/oder Nieten, aufweist.

16. Verfahrbare Fertigungsanlage nach Anspruch 15, **dadurch gekennzeichnet, dass** die Bearbeitungseinheit (2) ein Bearbeitungsroboter (2a) aufweist, welcher die Werkzeugeinheit (25) als Endeffektor trägt, vorzugsweise, dass der Bearbeitungsroboter (2a) eine Verstellkinematik (2c) mit mindestens vier Verstellachsen (2d) aufweist.

## Claims

1. Floor-bound vehicle, in particular for a movable production plant (1) with a processing unit (2) for processing a workpiece (3), with at least two drive units (5),
wherein the drive units (5) each comprise at least a drive wheel (6) and a further wheel (15) (where fitted), a travel drive (7) for driving the at least one drive wheel (6), a wheel carrier (8) on which the at least one drive wheel (6) is arranged, and a steering drive (9) for adjusting the wheel carrier (8) with the drive wheel (6) about a geometric steering axis (L) and thus for steering the drive wheel (6),
wherein for steering, the respective wheel carrier (8) can be adjusted relative to the respective travel drive (7) by means of the respective steering drive (9),
wherein the respective wheel carrier (8) has a pivot device (19) via which the drive wheel (6) and the further wheel (15) (where fitted) can be pivoted about a geometric pivot axis (S) in order to compensate for unevenness in the ground, and wherein during pivoting of the drive wheel (6) and the further wheel (15) (where fitted) about the geometric pivot axis (S), the travel drive (7) is co-pivoted.

2. Floor-bound vehicle according to Claim 1, **characterized in that** the respective drive unit (5) has a mounting portion (10) via which the drive unit (5), as a pre-assembled unit, can be attached to the floor-bound vehicle (4) and/or removed from the floor-bound vehicle (4).

3. Floor-bound vehicle according to Claim 1 or 2, **characterized in that** the respective travel drive (7) is rotationally locked with respect to its geometric drive axis (A) relative to the vehicle (4), in particular the mounting portion (10), preferably that the respective rotational locking (11) is achieved by a movably mounted rod (12), for which the rod (12) engages on the travel drive (7) and/or a fixing of the travel drive (13) and a point (14) which is stationary relative to the vehicle, in particular the mounting portion (10).

4. Floor-bound vehicle according to any of the preceding claims, **characterized in that** the respective wheel carrier (8) with the drive wheel (6) is adjustable by means of the respective steering drive (9) about the geometric steering axis (L) through at least 270°, further preferably at least 330°, further preferably at least 360°, further preferably at least 420°, further preferably freely.

5. Floor-bound vehicle according to any of the preceding claims, **characterized in that** the respective drive unit (5) has the further wheel (15), in particular a free-running wheel and/or a drive wheel, wherein the further wheel (15) is arranged on the wheel carrier (8) and wherein for steering, the wheel carrier (8) together with the drive wheel (6) and the further wheel (15) is adjustable by means of the steering drive (9) about the steering axis (L); preferably that the rotational axis (D) of the drive wheel (6) and the rotational axis (D) of the further wheel (15) are coaxial with one another.

6. Floor-bound vehicle according to any of the preceding claims, **characterized in that** the respective drive unit (5), in particular the wheel carrier (8), has at least one gear mechanism (16), in particular an angular gear (16a) and/or a reduction gear (16b), which is arranged in the drive train (17) from the travel drive (7) to the drive wheel (6) and transmits the drive power of the travel drive (7) to the drive wheel (6); preferably that the input shaft of a respective gear (16, 16a), in particular the angular gear (16a), is arranged coaxially with the drive shaft (A) of the travel drive (7), and that the output shaft of the respective gear (16, 16b), in particular the reduction gear (16b), is arranged coaxially with the rotational axis (D) of the drive wheel (6).

7. Floor-bound vehicle according to any of the preceding claims, **characterized in that** during pivoting, the rotational axis (D) of the drive wheel (6) and the rotational axis (D) of the further wheel (15) (where fitted) is/are tilted relative to the vehicle (4), in particular the mounting portion (10).

8. Floor-bound vehicle according to any of the preceding claims, **characterized in that** during pivoting of the drive wheel (6) and the further wheel (6) (where fitted) about the geometric pivot axis (S), the steering drive (9) is not co-pivoted.

9. Floor-bound vehicle according to any of the preceding claims, **characterized in that** the maximum pivot angle (SW) of the drive wheel (6) and the further wheel (15) (where fitted) about the geometric pivot axis (S) is dependent on the steering angle (LW) set by the steering drive (9).

10. Floor-bound vehicle according to any of the preceding claims, **characterized in that** the drive unit (5) has a steering gear (20), and that the steering drive (9) adjusts the wheel carrier (8) about the steering axis (L) via the steering gear (20); preferably that the steering gear (20) is a toothed gear and/or toothed belt gear and/or belt gear.

11. Floor-bound vehicle according to any of the preceding claims, **characterized in that** it is controlled automatically and guided contactlessly.

12. Floor-bound vehicle according to any of the preceding claims, **characterized in that** the drive units (5) are also retractable relative to the vehicle (4) such that the floor-bound vehicle (4) is placed on the ground for a secure stance, and in particular the drive wheel (6) or drive wheels (6) no longer touches or touch the ground, and/or that the floor-bound vehicle (4) has supports (22) for raising the floor-bound vehicle (4) such that, in the raised state of the vehicle (4), the drive wheel (6) or drive wheels (6) no longer touches or touch the ground (B).

13. Floor-bound vehicle, in particular for a movable production plant (1) with a processing unit (2) for processing a workpiece (3), with at least two drive units (5),
wherein the drive units (5) each comprise at least a drive wheel (6) and a further wheel (15) (where fitted), a travel drive (7) for driving the at least one drive wheel (6), a wheel carrier (8) on which the at least one drive wheel (6) is arranged, and a steering drive (9) for adjusting the wheel carrier (8) with the drive wheel (6) about a geometric steering axis (L) and thus for steering the drive wheel (6),
wherein the respective wheel carrier (8) has a pivot device (19) via which the drive wheel (6) and the further wheel (15) (where fitted) can be pivoted about a geometric pivot axis (S) in order to compensate for unevenness in the ground, wherein the rotational axis (D) of the drive wheel (6) is tiltable relative to the vehicle (4), in particular the mounting portion (10), and wherein during pivoting of the drive wheel (6) and the further wheel (15) (where fitted) about the geometric pivot axis (S), the travel drive (7) is co-pivoted.

14. Floor-bound vehicle according to Claim 13, **characterized by** the characterizing part of any of Claims 2 to 12.

15. Movable production plant for processing a workpiece (3), in particular a structural aircraft component, wherein the production plant (1) has a floor-bound vehicle (4) according to any of Claims 11 to 14 and a processing unit (2) for processing the workpiece (3) and arranged on the vehicle (4), wherein the processing unit (2) for processing the workpiece (3) has a tool unit (25), in particular a drilling and/or riveting unit for drilling and/or riveting.

16. Movable production plant according to Claim 15, **characterized in that** the processing unit (2) has a processing robot (2a) which carries the tool unit (25) as the end effector, preferably that the processing robot (2a) has adjustment kinematics (2c) with at least four adjustment axes (2d).

## Revendications

1. Véhicule à guidage au sol, en particulier pour une installation de fabrication (1) déplaçable, comprenant une unité d'usinage (2) destinée à usiner une pièce (3), comprenant au moins deux unités d'entraînement (5),
les unités d'entraînement (5) présentant chacune au moins une roue d'entraînement (6) et, le cas échéant, une roue supplémentaire (15), un entraînement de translation (7) destiné à entraîner l'au moins une roue d'entraînement (6), un support de roue (8) sur lequel est disposée l'au moins une roue d'entraînement (6), et un entraînement de direction (9) destiné à déplacer le support de roue (8) avec la roue d'entraînement (6) autour d'un axe de direction géométrique (L) et ainsi à diriger la roue d'entraînement (6),
le support de roue (8) respectif étant réglable, pour la direction, par l'entraînement de direction (9) respectif par rapport à l'entraînement de translation (7) respectif,
le support de roue (8) respectif présentant un appareil de pivotement (19), par l'intermédiaire duquel la roue d'entraînement (6) et, le cas échéant, la roue supplémentaire (15) peuvent pivoter autour d'un axe de pivotement géométrique (S) afin de compenser des irrégularités du sol, et lors d'un pivotement de la roue d'entraînement (6) et, le cas échéant, de la roue supplémentaire (15) autour de l'axe de pivotement géométrique (S), l'entraînement de translation (7) étant entraîné en pivotement simultanément.

2. Véhicule à guidage au sol selon la revendication 1, **caractérisé en ce que** l'unité d'entraînement (5) respective présente une section de montage (10), par l'intermédiaire de laquelle l'unité d'entraînement (5) peut être fixée en tant qu'unité prémontée sur le véhicule à guidage au sol (4) et/ou peut être détachée du véhicule à guidage au sol (4).

3. Véhicule à guidage au sol selon la revendication 1 ou 2, **caractérisé en ce que** l'entraînement de translation (7) respectif est, en ce qui concerne son axe d'entraînement géométrique (A), immobilisé en rotation par rapport au véhicule (4), en particulier par rapport à la section de montage (10), de préférence **en ce que** l'immobilisation en rotation (11) respective est réalisée par une tige (12) montée mobile, la tige (12) étant à cet effet en prise avec l'entraînement de translation (7) et/ou une fixation de l'entraînement de translation (13) ainsi qu'avec un point fixe du véhicule (14), en particulier la section de montage (10).

4. Véhicule à guidage au sol selon l'une quelconque des revendications précédentes, **caractérisé en ce que** le support de roue (8) respectif avec la roue d'entraînement (6) est réglable par l'entraînement de direction (9) respectif autour de l'axe de direction géométrique (L) sur au moins 270°, plus préférentiellement sur au moins 330°, plus préférentiellement sur au moins 360°, plus préférentiellement sur au moins 420°, plus préférentiellement librement.

5. Véhicule à guidage au sol selon l'une quelconque des revendications précédentes, **caractérisé en ce que** l'unité d'entraînement (5) respective présente la roue supplémentaire (15), en particulier une roue libre et/ou une roue d'entraînement, la roue supplémentaire (15) étant disposée sur le support de roue (8), et, pour la direction, le support de roue (8) étant réglable par l'entraînement de direction (9) autour de l'axe de direction (L) conjointement avec la roue d'entraînement (6) et la roue supplémentaire (15), de préférence **en ce que** l'axe de rotation (D) de la roue d'entraînement (6) et l'axe de rotation (D) de la roue supplémentaire (15) sont coaxiaux.

6. Véhicule à guidage au sol selon l'une quelconque des revendications précédentes, **caractérisé en ce que** l'unité d'entraînement (5) respective, en particulier le support de roue (8), présente au moins une transmission (16), en particulier une transmission angulaire (16a) et/ou une transmission réductrice (16b), laquelle est disposée dans la chaîne cinématique (17) entre l'entraînement de translation (7) et la roue d'entraînement (6) et transmet la force d'entraînement de l'entraînement de translation (7) à la roue d'entraînement (6), de préférence **en ce que** l'arbre d'entrée d'une transmission respective (16, 16a), en particulier de la transmission angulaire (16a), est disposé coaxialement à l'arbre d'entraînement (A) de l'entraînement de translation (7) et **en ce que** l'arbre de sortie de la transmission respective (16, 16b), en particulier de la transmission réductrice (16b), est disposé coaxialement à l'axe de rotation (D) de la roue d'entraînement (6).

7. Véhicule à guidage au sol selon l'une quelconque des revendications précédentes, **caractérisé en ce que**, lors du pivotement, l'axe de rotation (D) de la roue d'entraînement (6) et, le cas échéant, l'axe de rotation (D) de la roue supplémentaire (15) est incliné par rapport au véhicule (4), en particulier à la section de montage (10).

8. Véhicule à guidage au sol selon l'une quelconque des revendications précédentes, **caractérisé en ce que**, lors d'un pivotement de la roue d'entraînement (6) et, le cas échéant, de la roue supplémentaire (6) autour de l'axe de pivotement géométrique (S), l'entraînement de direction (9) n'est pas entraîné en pivotement.

9. Véhicule à guidage au sol selon l'une quelconque des revendications précédentes, **caractérisé en ce que** l'angle de pivotement maximal (SW) de la roue d'entraînement (6) et, le cas échéant, de la roue supplémentaire (15) autour de l'axe de pivotement géométrique (S) dépend de l'angle de direction (LW) réglé par l'entraînement de direction (9).

10. Véhicule à guidage au sol selon l'une quelconque des revendications précédentes, **caractérisé en ce que** l'unité d'entraînement (5) présente une transmission de direction (20) et **en ce que** l'entraînement de direction (9) règle le support de roue (8) autour de l'axe de direction (L) par l'intermédiaire de la transmission de direction (20), de préférence **en ce que** la transmission de direction (20) est une transmission à engrenages et/ou une transmission par courroie dentée et/ou une transmission par courroie.

11. Véhicule à guidage au sol selon l'une quelconque des revendications précédentes, **caractérisé en ce qu'**il est commandé automatiquement et guidé sans contact.

12. Véhicule à guidage au sol selon l'une quelconque des revendications précédentes, **caractérisé en ce que** les unités d'entraînement (5) sont, par ailleurs, escamotables par rapport au véhicule (4) de telle sorte que le véhicule à guidage au sol (4) repose sur le sol pour assurer une stabilité sûre et, en particulier, que la roue d'entraînement (6) ou les roues d'entraînement (6) ne sont plus en contact avec le sol, et/ou **en ce que** le véhicule à guidage au sol (4) présente des supports (22) destinés à soulever le véhicule à guidage au sol (4) de telle sorte que la roue d'entraînement (6) ou les roues d'entraînement (6), à l'état soulevé du véhicule (4), ne sont plus en contact avec le sol (B).

13. Véhicule à guidage au sol, en particulier pour une installation de fabrication (1) déplaçable, comprenant une unité d'usinage (2) destinée à usiner une pièce (3), comprenant au moins deux unités d'entraînement (5),
les unités d'entraînement (5) présentant chacune au moins une roue d'entraînement (6) et, le cas échéant, une roue supplémentaire (15), un entraînement de translation (7) destiné à entraîner l'au moins une roue d'entraînement (6), un support de roue (8) sur lequel est disposée l'au moins une roue d'entraînement (6), et un entraînement de direction (9) destiné à déplacer le support de roue (8) avec la roue d'entraînement (6) autour d'un axe de direction géométrique (L) et ainsi à diriger la roue d'entraînement (6),
le support de roue (8) respectif présentant un appareil de pivotement (19), par l'intermédiaire duquel la roue d'entraînement (6) et, le cas échéant, la roue supplémentaire (15) peuvent pivoter autour d'un axe de pivotement géométrique (S) afin de compenser des irrégularités du sol, l'axe de rotation (D) de la roue d'entraînement (6) étant inclinable par rapport au véhicule (4), en particulier à la section de montage (10), et lors d'un pivotement de la roue d'entraînement (6) et, le cas échéant, de la roue supplémentaire (15) autour de l'axe de pivotement géométrique (S), l'entraînement de translation (7) étant entraîné en pivotement simultanément.

14. Véhicule à guidage au sol selon la revendication 13, **caractérisé par** la partie caractérisante de l'une quelconque des revendications 2 à 12.

15. Installation de fabrication déplaçable destinée à l'usinage d'une pièce (3), en particulier d'un composant de structure d'aéronef,
l'installation de fabrication (1) présentant un véhicule à guidage au sol (4) selon l'une quelconque des revendications 11 à 14 et une unité d'usinage (2) destinée à l'usinage de la pièce (3), laquelle est disposée sur le véhicule (4), l'unité d'usinage (2) destinée à l'usinage de la pièce (3) présentant une unité d'outil (25), en particulier une unité de perçage et/ou de rivetage destinée au perçage et/ou au rivetage.

16. Installation de fabrication déplaçable selon la revendication 15, **caractérisée en ce que** l'unité d'usinage (2) présente un robot d'usinage (2a) qui porte l'unité d'outil (25) en tant qu'effecteur terminal, de préférence **en ce que** le robot d'usinage (2a) présente une cinématique de réglage (2c) comportant au moins quatre axes de réglage (2d).
